# EUROPÄISCHE PATENTSCHRIFT

(11) **EP 0 850 547 B1**
(45) Veröffentlichungstag und Bekanntmachung des Hinweises auf die Patenterteilung: **17.04.2002**
(21) Anmeldenummer: 96937178.0
(22) Anmeldetag: 03.09.1996
(51) Int. Cl.: H04Q 7/22, H04B 7/26

(54) **VERFAHREN ZUR ÜBERTRAGUNG VON DATENPAKETEN VON MOBILSTATIONEN ZU BASISSTATIONEN IN IM ZEITLAGENMULTIPLEXVERFAHREN BETRIEBENEN MOBILFUNKSYSTEMEN**
PROCESS FOR TRANSMITTING DATA PACKETS FROM MOBILE STATIONS TO BASE STATIONS IN MOBILE RADIO SYSTEMS OPERATED ON THE TIME MULTIPLEX SYSTEM
PROCEDE DE TRANSMISSION DE PAQUETS DE DONNEES ENTRE DES STATIONS MOBILES ET DES STATIONS DE BASE DANS DES SYSTEMES RADIO MOBILES FONCTIONNANT PAR MULTIPLEXAGE DANS LE TEMPS

(30) Priorität: 14.09.1995 DE 19534156
(43) Veröffentlichungstag der Anmeldung: 01.07.1998
(73) Patentinhaber: SIEMENS AKTIENGESELLSCHAFT, 80333 München (DE)
(72) Erfinder: LÜDERS, Christian, D-85540 Haar (DE)
(86) Internationale Anmeldenummer: DE9601640
(87) Internationale Veröffentlichungsnummer: WO9710685

(56) Entgegenhaltungen:
- EP-A- 0 522 636
- WO-A-94/05094
- GB-A- 2 277 232

## Beschreibung

Die Erfindung betrifft ein Verfahren zur Übertragung von Paketdaten von Mobilstationen zu Basisstationen in im Zeitlagenmultiplexverfahren betriebenen Mobilfunksystemen.

Zur Übertragung von Daten zwischen zwei Kommunikationsendgeräten kann auf verbindungsorientierte Konzepte und Konzepte auf der Basis virtueller (logischer) Verbindungen zurückgegriffen werden. Bei verbindungsorientierten Datenübertragungen müssen während der gesamten Zeit der Datenübertragung physikalische Ressourcen zwischen den zwei Kommunikationsendgeräten bereitgestellt werden.

Bei der Datenübertragung über logische Verbindungen ist eine dauerhafte Bereitstellung von physikalischen Ressourcen nicht nötig. Ein Beispiel für eine solche Datenübertragung ist die Paketdatenübertragung. Hier besteht während der gesamten Dauer der Datenübertragung eine logische Verbindung zwischen den zwei Kommunikationsendgeräten, jedoch werden physikalische Ressourcen nur während der eigentlichen Übertragungszeiten der Datenpakete bereitgestellt. Dieses Verfahren basiert darauf, daß die Daten in kurzen Datenpaketen, zwischen denen längere Pausen auftreten können, übermittelt werden. In den Pausen zwischen den Datenpaketen sind die physikalischen Ressourcen für andere logische Verbindungen verfügbar. Bezogen auf eine logische Verbindung werden physikalische Ressourcen eingespart.

Das Paketdatenübertragungsverfahren bietet sich insbesondere für Kommunikationssysteme mit begrenzten physikalischen Ressourcen an, für den Fall, daß nur sporadisch kurze Datenpakete übertragen werden müssen. Beispielsweise in Mobilfunksystemen, wie dem GSM-Mobilfunksystem, sind die physikalischen Ressourcen frequenzbereich- (Anzahl der Frequenzkanäle) und zeitlagenbeschränkt und müssen rationell genutzt werden.

Das GSM-Mobilfunksystem arbeitet im Zeitlagenmultiplexverfahren, so daß Zeitlagen innerhalb eines Frequenzkanals auf verschiedene Kommunikationsendgeräte aufgeteilt werden können. Bei einer Kommunikationsbeziehung zwischen einer Basisstation, die des weiteren mit einem Kommunikationsnetz verbunden ist, und einer Mobilstation muß sichergestellt werden, daß die von den verschiedenen Mobilfunkstationen gesendeten Informationen zeitlagengetreu in der Basisstation eintreffen. Da der Abstand und damit die Laufzeit zwischen Mobilstation und Basisstation durchaus unterschiedlich sein kann und sich darüber hinaus bei einer Bewegung der Mobilstation verändert, ist die Berechnung einer Vorhaltzeit nötig, die in der Mobilstation den Sendezeitpunkt für den jeweiligen Zeitschlitz beeinflußt.

Das GSM-System wurde für die Übertragung von Sprache konzipiert. Bei einer Sprachübertragung werden ständig Informationen zwischen Mobilstation und Basisstation ausgetauscht. Es besteht daher keine Schwierigkeit, die Vorhaltzeit anhand der ständig ausgetauschten Informationen ausreichend häufig zu bestimmen.

Der mit der Sprachübertragung einhergehende Signalisierungsaufwand, der für die Bestimmung der Vorhaltzeit mitgenutzt werden kann, ist jedoch für eine Paketdatenübertragung unangemessen hoch. Aus der GPRS-Tagung vom 10. bis 12. Januar 1995 ist durch Telia AB/Telia Research ein Verfahren zur Paketdatenübertragung bekannt, bei dem die Vorhaltzeit vor jeder Übertragung eines Datenpaketes bestimmt wird. Wie aus Seite 8, Punkte 3 und 4 der Updating-Prozedur hervorgeht, sendet die Mobilstation ein Zugriffsdatenpaket auf einem Zugriffskanal GACH, worauf die Basisstation die Vorhaltzeit (Timing Advance) bestimmt und über einen Quittungskanal GCCH die bestimmte Vorhaltzeit an die Mobilstation übermittelt.
Die Vorhaltzeit muß damit weiterhin relativ häufig bestimmt werden. Auch sind dabei Zugriffe auf den Zugriffs- und Quittierungskanal nötig bzw. müssen diese Kanäle extra vorgesehen werden.

Ein System dieser Art ist z.B. in GB-A-2 277 232 beschrieben.

Der Erfindung liegt die Aufgabe zugrunde, den Signalisierungsaufwand bei der Paketdatenübermittlung in Mobilfunksystemen zu verringern. Die Aufgabe wird ausgehend vom Verfahren gemäß den Merkmalen des Oberbegriffs des Patentanspruchs 1 durch dessen kennzeichnende Merkmale gelöst.

Das erfindungsgemäße Verfahren macht sich die Tatsache zunutze, daß sich eine Mobilstation überwiegend nur mit geringen Geschwindigkeiten der Basisstation nähert oder sich von ihr entfernt. Damit ändert sich auch die Signallaufzeit zwischen Mobilstation und Basisstation nur allmählich, so daß keine abrupten Änderungen der Vorhaltzeit nötig sind. Angesichts dieser Tatsache kann die Bestimmung der Vorhaltzeit an das Vorliegen bestimmter, auf die Zeitspanne zwischen Vorhaltzeit-bestimmungen bezogene Entscheidungskriterien gekoppelt werden, wenn die Übertragung der Datenpakete mit einer geringen Schutzzeit vorgenommen wird, d.h. die Schutzzeit kleiner der maximal zulässigen Signallaufzeit zwischen Mobilstation und Basisstation ist.

Die Schutzzeit ist definitionsgemäß die Zeit zwischen dem Ende eines übertragenen Datenpaketes und dem Ende der zugehörigen Zeitlage. Sie stellt sicher, daß bei geringem Abweichen des Eintreffens des Datenpaketes vom Raster der Zeitlagen der Basisstation keine Kollision der Datenpakete zweier Zeitlagen auftreten kann. Zum Beispiel für ein GSM-System bedeutet dies, daß bei einer geringen Schutzzeit von z.B. 8,25 bit (ca. 30 µs) und einer sich mit 36 km/h von der Basisstation entfernenden Mobilstation eine einmal eingestellte Vorhaltzeit für bis zu 7 Minuten auch bei ausbleibender Korrektur zu keiner Kollision von Datenpaketen führt.

Eine Schutzzeit von 10 bis 50 µs in einer Zeitlage im GSM-System stellt dabei noch eine rationelle Aufteilung der Ressource Zeit dar. Die relativ lange Zeitspanne, während der durch die einmalig eingestellte Vorhaltzeit Datenpaketkollisionen vermieden werden, kann dazu verwendet werden, daß die Entscheidungskriterien erst durch das Ende einer durch Parameter einstellbaren Periode, die etwas kürzer als die erwähnte Zeitspanne ist, erfüllt werden - Anspruch 2. Unabhängig von den tatsächlich gesendeten Datenpaketen wird die Vorhaltzeit nur in relativ großen Abständen neu berechnet und die Mobilstation darauf eingestellt. Der Signalisierungsaufwand ist dabei gering und vor der Übertragung eines Datenpaketes entsteht keine zusätzliche Verzögerung.

Alternativ dazu können die Entscheidungskriterien auch dadurch erfüllt werden, daß ein Datenpaket gesendet werden soll und die letzte Bestimmung der Vorhaltzeit eine vorbestimmte Zeitspanne zurückliegt - Anspruch 3. Eine fest eingestellte Periode wird hierbei dadurch ersetzt, daß vor jedem Senden eines Datenpaketes getestet wird, ob seit der letzten Bestimmung der Vorhaltzeit nur eine innerhalb einer tolerierbaren Zeitspanne liegende Zeit vergangen ist. Die Häufigkeit der Bestimmung der Vorhaltzeit kann unter Umständen zusätzlich eingeschränkt werden, jedoch ist vor jedem Senden eines Datenpaketes ein zusätzlicher Kontrollaufwand nötig.

Vorteilhafterweise enthält das Testpaket, anhand dessen Eintreffens bei der Basisstation diese die Vorhaltzeit bestimmt, eine Kennzeichnung, die angibt, daß lediglich die Vorhaltzeit bestimmt werden soll. Die Basisstation erkennt damit, daß daraufhin keine funktechnischen Ressourcen zugeteilt werden müssen. Auch kann bei der Übermittlung der bestimmten Vorhaltzeit auf zusätzliche Signalisierungen verzichtet werden, wenn die Bestätigung des Empfangs von Datenpaketen zur Übermittlung mitbenutzt wird.

Weitere vorteilhafte Ausgestaltungen des erfindungsgemäßen Verfahrens sind den übrigen Unteransprüchen zu entnehmen. Insbesondere eignet sich das erfindungsgemäße Verfahren für einen Einsatz in GSM-Mobilfunksystemen, wodurch Applikationen, wie mobiles Büro mit E-Mail, Fax und Dateiübertragung, Point of Sales-Realisierungen, Flottenmanagement und Verkehrsleitsysteme sowie ähnliche Anwendungen, realisierbar sind.

Das erfindungsgemäße Verfahren soll anhand von zeichnerischen Darstellungen näher erläutert werden.

Dabei zeigen
- FIG 1: eine schematische Darstellung der Luftschnittstelle zwischen einer Basisstation und einer Mobilstation innerhalb eines Mobilfunksystems,
- FIG 2: die bei der Datenpaketübertragung wichtigen Vorhaltzeiten und Schutzzeiten, die beim Vergleich der Zeitlagen von Mobilstation und Basisstation deutlich werden, und
- FIG 3: den Ablauf der Bestimmung der Vorhaltzeit und die Übertragung der Datenpakete sowie deren Quittierung.

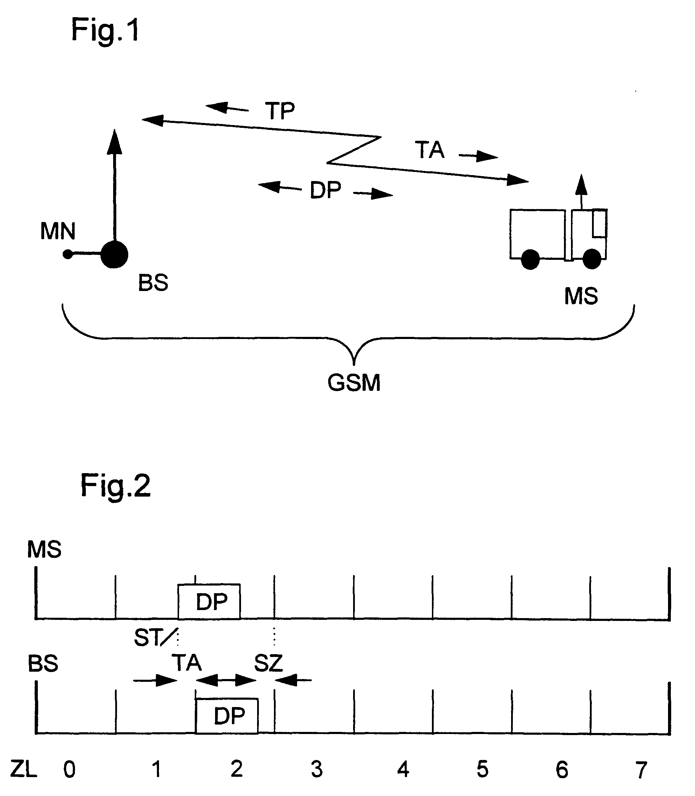

In FIG 1 ist eine Mobilstation MS, z.B. ein auf einem Lastkraftwagen einer Speditionsfirma montierter Fahrtenschreiber, der zur Übermittlung und zum Empfang von Daten mit der Zentrale der Speditionsfirma über eine Basisstation BS verbunden ist. Die Basisstation BS stellt die Verbindung zur Zentrale der Speditionsfirma über ein Mobilfunknetz MN her. Die Mobilstation MS, die Basisstation BS und das Mobilfunknetz MN sind dabei Teil eines GSM-Mobilfunksystems GSM.

Das GSM-Mobilfunksystem GSM arbeitet mit einer Kombination aus Frequenzmultiplexverfahren und Zeitlagenmultiplexverfahren. Jeder Frequenzkanal der Basisstation BS ist in acht Zeitlagen ZL unterteilt, die verschiedenen Mobilstationen MS zugeteilt werden können. Die zu übermittelnden Datenpakete DP zwischen Mobilstation MS und Basisstation BS müssen an das Zeitlagenraster der jeweils empfangenden Station angepaßt werden. Dabei ist besonders für den Empfang durch die Basisstation BS ein genaues zeitlagengetreues Anpassen der zu empfangenden Datenpakete DP nötig, da sie Datenpakete DP unter Umständen von mehreren Mobilstationen MS empfängt und diese Datenpakete DP nicht miteinander kollidieren dürfen.

Die Mobilstation MS muß dafür ein Datenpaket DP zu einem mit einer Vorhaltzeit TA beaufschlagten Sendezeitpunkt ST senden. Diese Vorhaltzeit TA wird in der Basisstation BS bestimmt, indem ein von der Mobilstation MS an die Basisstation BS übermitteltes Testpaket TP im Vergleich zum Zeitraster der Zeitlagen ZL der Basisstation BS ausgemessen wird.

Aus FIG 2 wird deutlich, daß die Mobilstation MS ein Datenpaket DP vor dem Beginn einer Zeitlage ZL (z.B. Zeitlage ZL 2) innerhalb der Basisstation BS senden muß, damit unter Berücksichtigung der Signallaufzeit zwischen Mobilstation MS und Basisstation BS das Datenpaket DP zu Beginn der Zeitlage ZL in der Basisstation BS eintrifft. Diese Zeit zwischen Sendezeitpunkt ST der Mobilstation MS und Beginn der Zeitlage ZL in der Basisstation BS wird als Vorhaltzeit TA bezeichnet.

Erfindungsgemäß wird die Übertragung des Datenpaketes DP mit einer geringen Schutzzeit SZ vorgenommen. Diese Schutzzeit SZ ist die Zeit zwischen Ende des Datenpaketes DP und dem Beginn der nächsten Zeitlage ZL (in FIG 2 Zeitlage ZL 3). Eine Zeitlage ZL im GSM-System ermöglicht die Übertragung von insgesamt 156,25 bit (1 bit entspricht ca. 3,7 µs) und eine Schutzzeit SZ von ca. 8,25 bit, wie sie für Normal-Bursts im GSM-System verwendet wird, erweist sich auch für die Übertragung von Datenpaket DP als ausreichend.

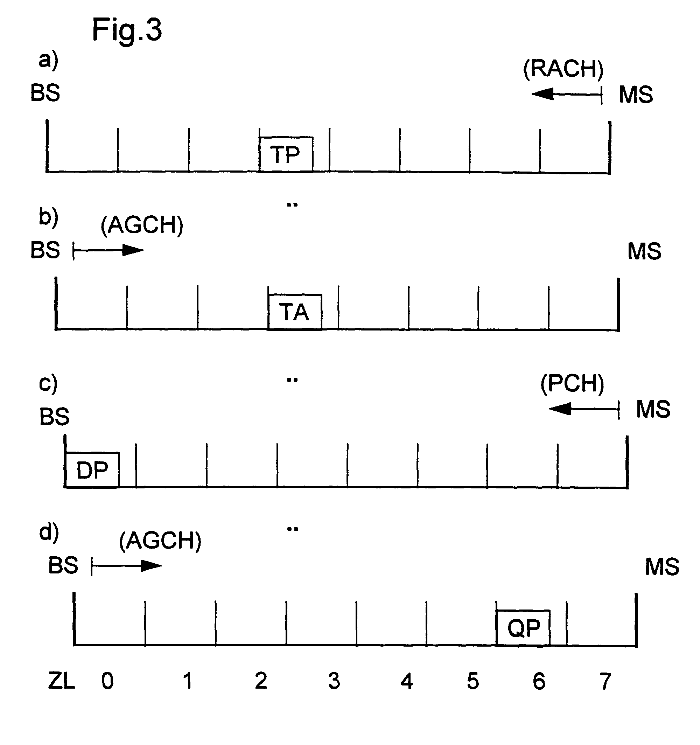

Der Ablauf der Datenpaketübertragung mit zugehöriger Bestimmung der Vorhaltzeit TA wird anhand von FIG 3 erläutert, wobei die zur Signalisierung gewählten Zeitlagen ZL frei wählbar sind und nur eine beispielhafte Auswahl getroffen wird.

Es wurde bereits eine logische Verbindung zwischen Mobilstation MS und Basisstation BS zur Übermittlung von Datenpaketen DP aufgebaut - nicht dargestellt. Dies geschieht, wie aus einer verbindungsorientierten Sprach- oder Datenübertragung bekannt, dadurch, daß der logische Kontext für die weitere Datenübertragung hergestellt wird. Die Mobilstation MS bekommt eine Adresse zugeteilt, die im weiteren Verlauf der Sitzung in die zu übertragenden Datenpakete DP integriert wird und die der Identifikation der logischen Verbindung dient.

Von diesem Zeitpunkt an bestimmt die Mobilstation MS in regelmäßigen Abständen die Vorhaltzeit TA. Dies geschieht z.B. dadurch, daß die Mobilstation MS auf einem Verbindungswunschkanal RACH, der auch zum Aufbau der logischen Verbindung genutzt wird, ein Testpaket TP an die Basisstation übermittelt (siehe FIG 3a). Dieses Testpaket TP erhält zusätzlich eine Kennzeichnung, daß lediglich die Vorhaltzeit TA bestimmt werden soll. Somit braucht die Basisstation BS keine physikalischen Ressourcen, d.h. keine Zeitlage ZL, zu reservieren bzw. zuzuteilen. Die Basisstation BS bestimmt aus dem Zeitpunkt des Eintreffens des Testpaketes TP die Vorhaltzeit TA und übermittelt den Wert der Vorhaltzeit TA auf einem Quittierungskanal AGCH der Mobilstation Mobilstation (siehe FIG 3b).

Diese Bestimmung der Vorhaltzeit TA kann nach einer vorbestimmten Periode vorgenommen werden oder sie wird dann durchgeführt, wenn ein Datenpaket DP von der Mobilstation MS gesendet werden soll und seit der letzten Bestimmung der Vorhaltzeit TA ein über einer vorbestimmten Zeitspanne liegender Zeitwert vergangen ist.

Im ersten Fall kann die vorbestimmte Periode entweder fest eingestellt sein, beispielsweise drei Minuten für eine Basisstation BS im Stadtgebiet, auch sind dabei einstellbare Anpassungen an die Art des durch die Mobilstation MS in Anspruch genommenen Dienstes möglich (für stationäre oder wenig mobile Point of Sales, z.B. sehr lange Perioden) oder die Periode zur Bestimmung der Vorhaltzeit TA wird adaptiv festgelegt. Zu Beginn einer logischen Verbindung sind z.B. sehr kurze Periodenlängen fest eingestellt, verändert sich die Vorhaltzeit TA jedoch nicht oder nur kaum, wird diese Periode verlängert. Auch im zweiten Fall kann die vorbestimmte Zeitspanne an ähnliche Bedingungen geknüpft sein.

Ein Datenpaket DP wird von der Mobilstation MS an die Basisstation BS über einen Nutzkanal PCH zur Paketdatenübertragung übermittelt (siehe FIG 3c). Die zuvor bestimmte Vorhaltzeit TA wird bei der Bestimmung des Sendezeitpunktes ST berücksichtigt. Die Basisstation BS quittiert den Empfang des Datenpaketes DP auf dem entsprechenden Quittierungskanal AGCH mit Hilfe eines Quittierungspaketes QP (siehe FIG 3d). Dieses Quittierungspaket QP kann zu einer weiteren Übertragung einer bestimmten Vorhaltzeit TA genutzt werden.

Ist das Mobilfunksystem GSM derart ausgestaltet, daß den Mobilstationen MS nicht jeweils eine bestimmte Zeitlage ZL zugeteilt wird, sondern diese die Zeitlage ZL selbst auswählen, so könnte der Fall eintreten, daß zwei verschiedene Mobilstationen MS auf dieselbe Zeitlage ZL im selben Frequenzkanal zugreifen. Die Basisstation BS könnte dadurch kein Datenpaket DP auswerten und würde die Quittierung des Datenpaketes DP unterlassen. Die Mobilstationen MS müßten jeweils ihr Datenpaket DP erneut senden. Um eine erneute Kollision zu vermeiden, wird eine Zeitlage ZL nach einem Zufallssystem innerhalb einer bestimmten Periode erneut ausgewählt. Der Übertragungsversuch wird solange durchgeführt, bis die Basisstation BS den Empfang des Datenpaketes DP entsprechend quittiert.

## Patentansprüche

1. Verfahren zur Übertragung von Datenpaketen (DP) von Mobilstationen (MS) zu Basisstationen (BS) in im Zeitlagenmultiplexverfahren betriebenen Mobilfunksystemen (GSM), bei dem zur Bestimmung einer Vorhaltzeit (TA) des Sendezeitpunktes (ST) der Mobilstation (MS)
- ein Testpaket (TP) von der Mobilstation (MS) an die Basisstation (BS) übertragen wird,
- durch die Basisstation (BS) aus dem Zeitpunkt des Eintreffens des Testpakets (TP) innerhalb der Zeitlagen (ZL) der Basisstation (BS) die Vorhaltzeit (TA) bestimmt wird,
- durch die Basisstation (BS) der Mobilstation (MS) die Vorhaltzeit (TA) übermittelt wird und
- durch die Mobilstation (MS) ein Datenpaket (DP) zu einem die Vorhaltzeit (TA) berücksichtigenden Sendezeitpunkt (ST) zeitlagengetreu übermittelt wird,
**dadurch gekennzeichnet,**
- **daß** die Bestimmung der Vorhaltzeit (TA) nur nach Vorliegen bestimmter, auf die Zeitspanne zwischen Vorhaltzeit-Bestimmungen bezogener Entscheidungskriterien veranlaßt wird und
- wobei die Übertragung der Datenpakete (DP) mit einer Schutzzeit (SZ) vorgenommen wird, die kleiner der maximal zulässigen Signallaufzeit zwischen Mobilstation (MS) und Basisstation (BS) ist.

2. Verfahren nach Anspruch 1,
**dadurch gekennzeichnet,**
**daß** die auf die Zeitspanne zwischen Vorhaltzeit-Bestimmungen bezogenen Entscheidungskriterien durch das Ende einer per Parameter einstellbaren Periode erfüllt werden.

3. Verfahren nach Anspruch 1,
**dadurch gekennzeichnet,**
**daß** die auf die Zeitspanne zwischen Vorhaltzeit-Bestimmungen bezogenen Entscheidungskriterien dadurch erfüllt werden, daß beim Senden eines Datenpakets (DP) die letzte Bestimmung der Vorhaltzeit (TA) eine vorbestimmte Zeitspanne zurückliegt.

4. Verfahren nach einem der vorhergenden Ansprüche,
**dadurch gekennzeichnet,**
**daß** das Testpaket (TP) eine Kennzeichnung enthält, die angibt, daß die Vorhaltzeit (TA) bestimmt werden soll.

5. Verfahren nach einem der vorhergenden Ansprüche,
**dadurch gekennzeichnet,**
**daß** das Mobilfunksystem (GSM) als GSM-Mobilfunksystem ausgeprägt ist.

6. Verfähren nach Anspruch 5,
**dadurch gekennzeichnet,**
**daß** die Übermittlung der Vorhaltzeit (TA) mit der Empfangsbestätigung auf einem bereits vorhandenen Quittierungskanal (AGCH) erfolgt.

7. Verfahren nach einem der Ansprüche 5 oder 6,
**dadurch gekennzeichnet,**
**daß** das Testpaket (TP) von der Mobilstation (MS) an die Basisstation (BS) auf einem bereits vorhandenen Verbindungswunschkanal (RACH) übertragen wird.

8. Verfahren nach einem der vorhergehenden Ansprüche,
**dadurch gekennzeichnet,**
**daß** die Schutzzeit (SZ) 10 bis 50 µs beträgt.

## Claims

1. Method for transmitting data packets (DP) from mobile stations (MS) to base stations (BS) in mobile radio systems (GSM) which are operated using the time-division multiplexing method, in which, in order to determine a time advance (TA) for the transmission time (ST) from the mobile station (MS),
- a test packet (TP) is transmitted from the mobile station (MS) to the base station (BS),
- the base station (BS) uses the time of arrival of the test packet (TP) within the time division (ZL) at the base station (BS) to determine the time advance (TA),
- the base station (BS) transmits the time advance (TA) to the mobile station (MS), and
- the mobile station (MS) transmits a data packet (DP) in the correct time division at a transmission time (ST) which takes account of the time advance (TA),
**characterized**
- **in that** the process of determining the time advance (TA) is initiated only when specific decision criteria, which relate to the time interval between time advance determination processes, are satisfied, and
- with the data packets (DP) being transmitted with a guard time (SZ) which is less than the maximum permissible signal propagation time between the mobile station (MS) and the base station (BS).

2. Method according to Claim 1,
**characterized**
**in that** the decision criteria which relate to the time interval between time advance determination processes are satisfied by the end of a parametrically adjustable period.

3. Method according to Claim 1,
**characterized**
**in that** the decision criteria which relate to the time interval between time advance determination processes are satisfied in that, when transmitting a data packet (DP), the most recent determination of the time advance (TA) occurred at a predetermined time interval previously.

4. Method according to one of the preceding claims,
**characterized**
**in that** the test packet (TP) contains an identification code, which indicates that the time advance (TA) should be determined.

5. Method according to one of the preceding claims,
**characterized**
**in that** the mobile radio system (GSM) is in the form of a GSM mobile radio system.

6. Method according to Claim 5,
**characterized**
**in that** the time advance (TA) is transmitted together with the reception acknowledgement on an already existing acknowledgement channel (AGCH).

7. Method according to one of Claims 5 or 6,
**characterized**
**in that** the test packet (TP) is transmitted from the mobile station (MS) to the base station (BS) on an already existing connection request channel (RACH).

8. Method according to one of the preceding claims,
**characterized**
**in that** the guard time (SZ) is 10 to 50 µs.

## Revendications

1. Procédé de transmission de paquets de données (DP) entre des stations mobiles (MS) et des stations de base (BS) dans des systèmes radio mobiles fonctionnant par multiplexage dans le temps (GSM), dans lequel pour déterminer une constante de temps (TA) du moment d'émission (ST) de la station mobile (MS)
- un paquet d'essai (TP) est transmis de la station mobile (MS) à la station de base (BS),
- la constante de temps (TA) est déterminée par la station de base (BS) à partir du moment de l'arrivée du paquet d'essai (TP) au sein des positions temporelles (ZL) de la station de base (BS),
- la constante de temps (TA) est transmise par la station de base (BS) de la station mobile (MS) et
- un paquet de données (DP) est transmis fidèlement aux positions temporelles par la station mobile (MS) à un moment d'émission (ST) tenant compte de la constante de temps (TA),
**caractérisé en ce que**
- la détermination de la constante de temps (TA) n'est provoquée qu'après présentation de certains critères de décision appliqués au laps de temps entre les déterminations de constante de temps et
- dans lequel la transmission des paquets de données (DP) est entreprise avec un temps de garde (SZ) qui est inférieur au retard du signal au maximum admissible entre la station mobile (MS) et la station de base (BS).

2. Procédé selon la revendication 1, **caractérisé en ce que** les critères de décision appliqués au laps de temps entre les déterminations de constante de temps sont remplis par la fin d'une période réglable par paramètres.

3. Procédé selon la revendication 1, **caractérisé en ce que** les critères de décision appliqués au laps de temps entre les déterminations de constante de temps sont remplis par le fait que lors de l'envoi d'un paquet de données (DP), la dernière détermination de la constante de temps (TA) se situe en arrière d'un laps de temps prédéterminé.

4. Procédé selon l'une des revendications précédentes, **caractérisé en ce que** le paquet d'essai (TP) contient une caractéristique indiquant que la constante de temps (TA) doit être déterminée.

5. Procédé selon l'une des revendications précédentes, **caractérisé en ce que** le système radio mobile (GSM) est exprimé en tant que système radio mobile GSM.

6. Procédé selon la revendication 5, **caractérisé en ce que** la transmission de la constante de temps (TA) se fait avec l'accusé de réception sur un canal d'accusé de réception déjà présent (AGCH).

7. Procédé selon l'une des revendications 5 ou 6, **caractérisé en ce que** le paquet d'essai (TP) est transmis de la station mobile (MS) à la station de base (BS) sur un canal d'intention d'appel déjà présent (RACH).

8. Procédé selon l'une des revendications précédentes, **caractérisé en ce que** le temps de garde (SZ) est de 10 à 50 µs.
